(19) Europäisches Patentamt
European Patent Office
Office européen des brevets

(11) **EP 0 818 673 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(51) Int Cl.⁷: **G01M 7/02**

(21) Anmeldenummer: **97110689.3**

(22) Anmeldetag: **01.07.1997**

(54) **Verfahren zur adaptiven Istwert-Korrektur bei Schwingfestigkeits-Versuchen**

Vibration resistance tests with a procedure for adaptive correction of the actual value

Essais de résistance aux vibrations avec un procédé pour la correction adaptative d'une valeur réelle

(84) Benannte Vertragsstaaten:
**DE ES FR GB IT**

(30) Priorität: **12.07.1996 DE 19628100**

(43) Veröffentlichungstag der Anmeldung:
**14.01.1998 Patentblatt 1998/03**

(73) Patentinhaber: **Bayerische Motoren Werke Aktiengesellschaft
80788 München (DE)**

(72) Erfinder:
• **Fiedler, Bernhart
  81247 München (DE)**
• **Schütz, Dieter, Dr.
  64354 Reinheim (DE)**

(56) Entgegenhaltungen:
**US-A- 5 323 002        US-A- 5 422 834**

**Beschreibung**

Die Erfindung betrifft ein Verfahren zur adaptiven Istwert-Korrektur bei Schwingfestigkeitsversuchen gemäß dem Oberbegriff des Anspruchs 1.

Bei der Prüfstandssimulation von Belastungen an einer Konstruktion besteht die Aufgabe, die im realen Betrieb auftretenden Belastungen im Prüfstand möglichst originalgetreu wiederzugeben. Die Möglichkeit, diese Belastung wirklichkeitsgetreu wiederzugeben, hängt von vielen Faktoren ab, die durch das Prüfteil, den Prüfaufbau und die Leistungscharakteristik der die Last erzeugenden Komponenten mit den zugehörigen Regelkreisen bestimmt werden. Die Güte einer Belastungssimulation wird u. a. durch die Abweichung der erreichten Belastungen (Istwert) von den gewünschten, vorgesehenen Belastungen (Sollwert) beschrieben.

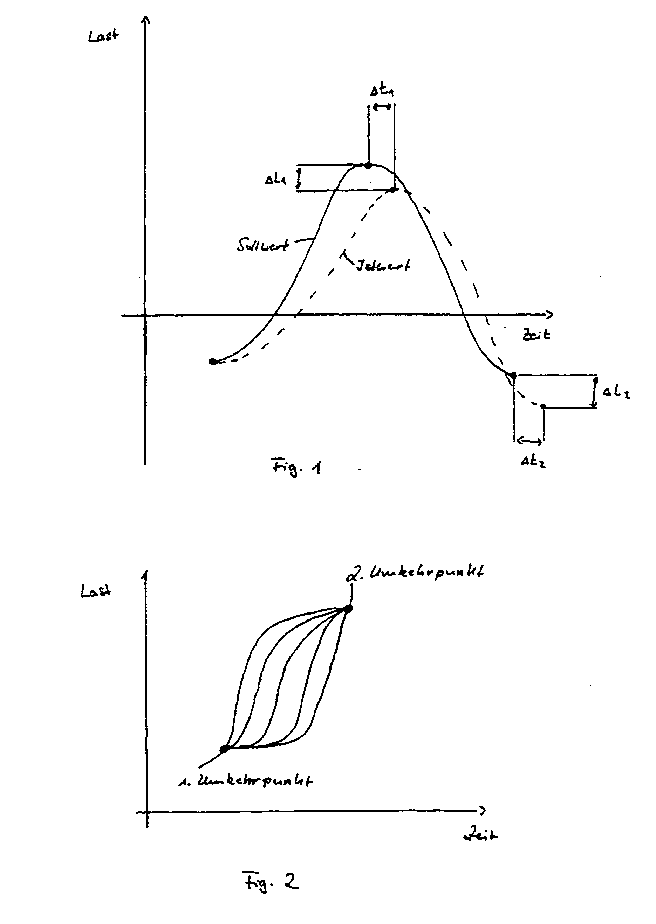

In Fig. 1 ist ein Lastverlauf über der Zeit (Last-Zeit-Funktion) als Sollwert und der von einem Prüfstand tatsächlich erzeugte Lastverlauf als Istwert dargestellt. Typische Abweichungen der Istwerte vom Sollwert sind Lastüberschreitungen bzw. -unterschreitungen und zeitliche Verschiebungen. Schwerpunktmäßig werden diese Abweichungen nur in den Umkehrpunkten der Last betrachtet, da die Umkehrungen die für die Schwingfestigkeit wichtigsten Parameter einer Last-Zeit-Funktion sind.

Grundsätzlich sind Schwingfestigkeitsversuche mit einer oder mehreren Lastkomponenten, die gleichzeitig auf das Prüfteil einwirken, zu unterscheiden.

Problematisch ist, daß durch die Abweichung des Istwertes vom Sollwert das Ergebnis eines Schwingfestigkeitsversuches verfälscht werden kann. Solche Abweichungen sollten vermieden werden.

Grundsätzlich gibt es mehrere verschiedene Ansätze, um Abweichungen zwischen Soll- und Istwert zu vermeiden. Für Versuche mit nur einer Belastungskomponente werden vorzugsweise "matrix-orientierte" Verfahren verwendet.

Für Versuche mit mehreren Belastungskomponenten werden dagegen Verfahren angewendet, die über experimentell zu ermittelnde Übertragungsfunktionen eine neue "verzerrte" Sollwert-Zeitfunktion errechnen. Dies geschieht im allgemeinen durch iterative Lernschritte, die dem eigentlichen Schwingungsfestigkeitsversuch zeitlich vorgeschaltet sind.

Das oben erwähnte matrix-orientierte Verfahren ist typischerweise nicht geeignet, die Last-Zeitverläufe für Versuche mit mehreren Lastkomponenten zu korrigieren, da hierfür explizit unterschiedliche Frequenzen und Kurvenformen auch für sog. Halblastspiele - das ist der Bereich zwischen zwei Umkehrpunkten - berücksichtigt werden müssen.

Für derartige Versuche haben sich komplizierte Verfahren mit experimentell ermittelten, frequenzabhängigen Übertragungsfunktionen durchgesetzt. Diese Verfahren bieten im allgemeinen jedoch keine Möglichkeit, die in allen Versuchen über die Laufzeit auftretenden Veränderungen automatisch (adaptiv) zu berücksichtigen.

Aufgabe der Erfindung ist es daher, ein Verfahren der eingangs genannten Art dahingehend weiterzubilden, daß die Fehler zwischen einem Soll- und dem tatsächlichen Istwert selbständig korrigiert werden und die gesamte Leistungsfähigkeit des entsprechenden Regelkreises unter Beibehaltung der zeitlichen Korrelation der einzelnen Kräfte optimal ausgenützt werden kann.

Diese Aufgabe wird durch die im Anspruch 1 angegebenen Merkmale gelöst.

Demgemäß werden bei einem Verfahren der eingangs genannten Art dem Soll- und Istwert zugeordnete Signale in jeweils zumindest ein Einzelereignis aufgelöst, welche durch zwei Umkehrpunkte definiert sind und beschrieben werden durch ein erstes Lastmaß im ersten Umkehrpunkt, ein zweites Lastmaß im zweiten Umkehrpunkt, einen Zeitabstand zwischen den Umkehrpunkten oder die Zeitpunkte der Umkehrpunkte und eine Form der Verbindungskurve zwischen den beiden Umkehrpunkten. Die einander entsprechenden Einzelereignisse von Soll- und Istwerten werden miteinander verglichen und aus den Abweichungen der neue Korrektur-Sollwert gebildet, der zur weiteren Ansteuerung der Prüfvorrichtung verwendet wird.

Die Abweichungen des Istwertes werden immer auf den gewollten Sollwert bezogen und nicht auf den Korrektur-Sollwert, der lediglich zur Ansteuerung der Prüfvorrichtung dient. Der gewollte oder tatsächliche Sollwert kann beispielsweise experimentell bestimmt sein.

Weitere vorteilhafte Ausführungsformen sind in den Unteransprüchen definiert.

Die Erfindung wird nachfolgend anhand eines Ausführungsbeispiels - auch hinsichtlich weiterer Vorteile und Merkmale - mit Bezug auf die beiliegenden Zeichnungen erläutert, in denen

Fig. 1    ein Last-Zeit-Diagramm darstellt, aus dem die Abweichungen zwischen Soll- und Istwert hervorgehen,

Fig. 2    ein Last-Zeit-Diagramm darstellt, in welchem verschiedene Kurvenformen zwischen zwei Umkehrpunkten eines Ereignisses dargestellt sind und

Fig. 3    ein Last-Zeit-Diagramm ist, in welchem die Funktion von Stützpunkten zur Ermittlung der Abweichung zwischen Soll- und Istwert dargestellt ist.

Unter Last oder Belastung wird vorliegend auch beispielsweise der Weg, die Spannung, die Kraft, die Dehnung, das Moment etc. verstanden. Wesentlich ist, daß diese Größe in Soll- und Istwert durch eine elektrische Größe in digitaler oder analoger Form beschrieben wird.

Ein Kernpunkt des vorliegenden Verfahrens ist die Definition von Einzelereignissen zwischen zwei Umkehrpunkten nach Lastmaß, Zeiteinordnung und Verbindungskurve. Diese einzelnen Ereignisse sind Halblastspiele, d. h. Übergänge zwischen zwei benachbarten Umkehrpunkten.

Jedes Zeitsignal ist als eine Folge von herauslösbaren Einzelereignissen beschreibbar. Unter diesen Voraussetzungen kann eine Matrix oder eine andere Anordnung von Werten zur Informationsspeicherung angelegt werden, die angibt, wie weit der Istwert für jedes Einzelereignis vom (gewollten) Sollwert abweicht.

Aus dieser Matrix (Fehler-Matrix) kann eine Korrektur-Matrix abgeleitet werden, die für jedes Einzelereignis (Halblastspiel) eine bestimmte Korrektur für den Sollwert angibt. Ziel ist es, den Sollwert so zu einem Korrektur-Sollwert zu verändern, daß durch die Ansteuerung einer Prüfvorrichtung mit dem ermittelten Korrektur-Sollwert der Istwert mit dem gewollten und tatsächlichen Sollwert möglichst übereinstimmt. Die Grenzen des Verfahrens sind erreicht, wenn die Einzelereignisse nicht mehr definiert werden können, beispielsweise weil sie unterschiedliche Eigenschaften, z. B. in Bezug auf die Frequenz oder die Form des Signalverlaufs zwischen den Umkehrpunkten haben.

Für die Versuche beispielsweise mit mehreren Lastkomponenten müssen zur Beschreibung der herausgelösten Halblastspiele, also der Einzelereignisse, die Werte der benachbarten Umkehrpunkte, deren zeitlicher Abstand und die Funktion (Kurvenform), mit der die beiden Umkehrpunkte verbunden sind, bekannt sein. Femer ist auch die Phasenbeziehung zwischen den einzelnen Lastkomponenten bzw. deren Signalen zu berücksichtigen und einzuhalten.

Ein wesentlicher Gedanke beim vorliegenden Verfahren besteht also darin, für Versuche mit mehreren Lastkomponenten das transiente Signal der einzelnen Kanäle jeweils in Einzelereignisse aufzulösen.

Die transienten Sollwert-Zeitfunktionen werden in Einzelereignisse aufgelöst, deren Daten dann in sog. "Softwert-files" in chronologisch richtiger Reihenfolge abgespeichert werden. Dies muß für jeden einzelnen Kanal geschehen, wobei der Phasenbezug der einzelnen Kanäle zueinander durch eine Zeitangabe gewährleistet ist. Zusätzlich muß für den Phasenbezug beachtet werden, daß der Zeitpunkt, zu dem der zweite Umkehrpunkt des Einzelereignisses auftritt, auf eine Zeitachse bezogen wird. Hierzu wird typischerweise ein Masterkanal für eine Lastkomponente definiert, und zwar ist das derjenige Kanal bzw. diejenige Lastkomponente, der am wenigsten prüftechnische Reserven besitzt und somit nicht mehr beschleunigt werden kann. Die anderen Kanäle sind sog. "Slave-Kanäle". Das Kriterium für die Auswahl des Masterkanals sind die größten zeitlichen Verschiebungen zwischen Sollwert und Istwert.

Die Lastumkehrpunkte und der dazwischenliegende Zeitraum Δt werden durch konkrete Zahlenwerte beschrieben. Die Kurvenform dagegen wird in mehreren Klassen kategorisiert und ebenfalls durch einen Zahlenwert in der Filestruktur beschrieben. Die Kurvenkategorisierung geschieht in einer wählbaren Feinheit, wie dies beispielsweise aus Fig. 2 ersichtlich ist, in der zwei Umkehrpunkte durch verschiedene Kurvenformen verbunden sind. Eine dieser Kurvenformen kommt einer vordefinierten Kurvenform (gemessener Sollwert) am nächsten.

Die diskreten Werte der Kurvenformen sind zentral im Speicher, getrennt vom Sollwertablauf beschreibenden File abgelegt.

Grundsätzlich ist es natürlich auch möglich, die Kurvenform für jedes Einzelereignis vollständig mathematisch zu beschreiben (z.B. in Form sog. Splines) und direkt im File pro Halblastspiel abzulegen. Eine Kombination aus den beiden Kurvenform-Beschreibungen in ein und demselben File ist ebenfalls möglich.

Der Sollwert wird als analoges oder digitales Sollwertsignal an eine Regelelektronik weitergegeben. Dies geschieht, durch die Zeit synchronisiert (phasentreu), für alle Kanäle eines Prüfsystems mit mehreren Lastkomponenten. Die an der Prüfeinrichtung gemessenen Istwerte jeder Lastkomponente werden ebenfalls in Einzelereignisse zerlegt, und dann werden die den Einzelereignissen entsprechenden Daten ermittelt.

Anschließend können die einander entsprechenden Parameter (Soll- und Istwert), nämlich der Lastwert des zweiten Umkehrpunktes (der Lastwert des ersten Umkehrpunkts wurde schon als Lastwert des zweiten Umkehrpunkts im vorausgegangenen Halblastspiel (Einzelereignis) bearbeitet), der Zeitabstand Δt und die Kategorie der Kurvenform beider einander entsprechender Einzelereignisse verglichen werden. Entsprechend der Abweichung kann eine Korrektur des Sollwertes zu einem (neuen) Korrektur-Sollwert vorgenommen werden. Die neu gefundenen Korrektur-Sollwert-Werte werden parallel zum ursprünglichen Sollwertfile als korrigiertes Sollwertfile abgelegt. Dieses korrigierte Sollwert-file wird für die Ausgabe in der nächsten Teilfolge (Wiederholperiode) verwendet.

Auf diese Weise wird das Sollwertfile einmal pro Wiederholperiode (adaptiv) korrigiert. Hierbei ist natürlich zu beachten, daß für den Sollwert-Istwert-Vergleich und den daraus ermittelten Korrekturwerten jeweils der aktuelle Istwert mit dem ursprünglichen (also dem tatsächlich gemessenen) Sollwert der ersten Wiederholperiode verglichen werden muß. Die Strategie zur Fehlerkorrektur, die sich an den Soll-Istwert-Vergleich anschließt, kann vom Anwender in weiten Bereichen an die Belange des jeweiligen Prüfproblems angepaßt werden.

Wenn der Istwert gegenüber der Sollwertkurve eine starke Verzerrung aufweist, so ist eine dritte Form der Beschreibung der Kurvenform möglicherweise angebracht. Beliebig viele Stützstellen zwischen den Extremas werden zusätzlich mit ihrem zeitlichen Auftreten abgelegt. In den meisten Fällen dürfte einer, zwei oder drei ausreichen. Auch zum Zeitpunkt des Auftretens dieser Stützpunkte wird Soll- und Istwert verglichen und ggf. in der beschriebenen Form eine Korrektur am Sollwert angebracht, um die richtige Kurvenform entsprechend dem eigentlichen Sollwert beim Istwert zu erreichen.

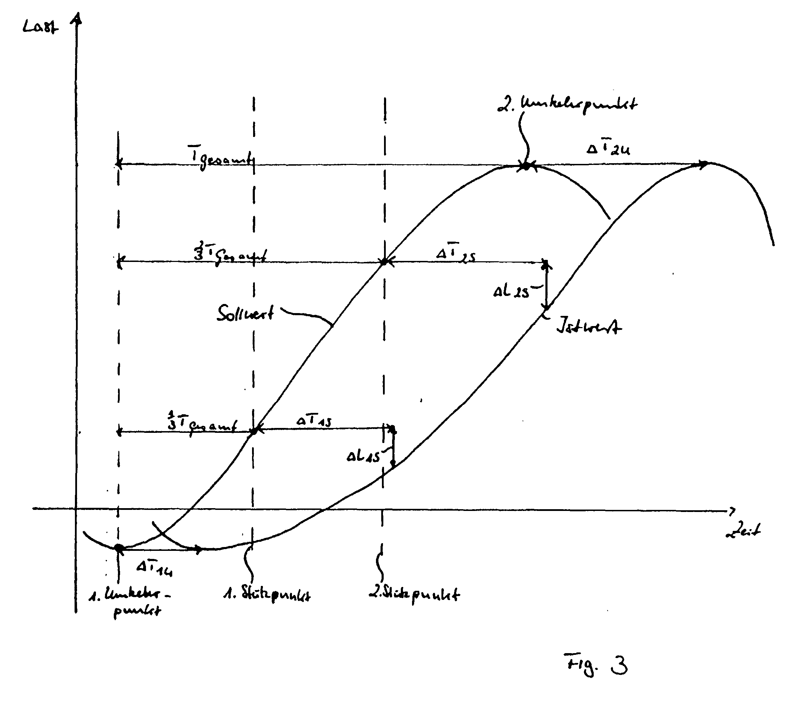

In Fig. 3 ist eine adaptive Kurvenformanpassung mit zwei Stützpunkten dargestellt, wobei in dem Last-Zeit-Diagramm eine Kurve die Sollwert-Kurve und die andere Kurve eine dazu verschobene Istwert-Kurve darstellt. Grundsätzlich muß bei der Verwendung von Stützpunkten der Zeitversatz zwischen Soll- und Istwert mit einbezogen werden. Der zeitliche Versatz kann an den Umkehrpunkten ($\Delta T_{U1}$, $\Delta T_{U2}$) abgelesen werden. Gemäß Fig. 3 werden bei den beiden Stützpunkten zwischen den beiden Umkehrpunkten des betrachteten Halbspieles die Gesamtzeit zwischen den Umkehrpunkten $T_{Gesamt}$ gedrittelt.

Im Sollwert tritt also der erste Stützpunkt nach einem Drittel der Zeit (1/3 $T_{gesamt}$) zwischen den Umkehrpunkten und dem zweiten Stützpunkt nach 2/3 dieser Zeit (2/3 $T_{Gesamt}$) im Sollwert auf.

Der Istwert ist gegenüber dieser Zeit verschoben und zwar im Beispiel am ersten Umkehrpunkt um $\Delta T_{U1}$ und am zweiten Umkehrpunkt um $\Delta T_{U2}$. Hierbei können $\Delta T_{U1}$ und $\Delta T_{U2}$ durchaus unterschiedliche Werte annehmen. Der Vergleich von Soll- und Istwert an einem Stützpunkt muß also mit folgender Zeitverschiebung $T_{Stützpunkt}$ ($\Delta T_{1S}$, $\Delta T_{2S}$) vorgenommen werden:

Zum Beispiel am ersten Stützpunkt

$$\Delta T_{1S} = \Delta T_{U1} + \frac{(\Delta T_{U2} - \Delta T_{U1})}{3} = 2/3 \, \Delta T_{U1} + 1/3 \, \Delta T_{U2}$$

oder am zweiten Stützpunkt

$$\Delta T_{2S} = \Delta T_{U1} + \frac{2 \cdot (\Delta T_{U2} - \Delta T_{U1})}{3} = 1/3 \, \Delta T_{U1} + 2/3 \, \Delta T_{U2}$$

Die Faktoren resultieren aus der Mittelung der Zeitverschiebung am ersten und zweiten Umkehrpunkt. Liegt zu diesen Zeitpunkten der Istwert z. B. tiefer als der Sollwert ($\Delta L_{1S}$, $\Delta L_{2S}$), so wird dieser in der nächsten Wiederholperiode korrigiert, indem die Kurve des Sollwertes am ersten Stützpunkt um einen entsprechenden Betrag angehoben wird.

Zwar hat das beschriebene Verfahren den Nachteil, daß die Korrekturen am Einzelereignis Halblastspiel nur einmal pro Wiederholperiode vorgenommen werden können. Bei Versuch mit großer Wiederholhäufigkeit der Wiederholperioden stellt dies jedoch keine nennenswerte Einschränkung dar.

Unter günstigen Randbedingungen ist es vorstellbar, daß die Korrekturwerte statt wie oben beschrieben nicht aus einem File der sequentiellen Einzelereignisse entnommen werden (File-orientierte Korrektur), sondern aus einer mehrdimensionalen Korrektur-Matrix. Die verschiedenen, in dieser mehrdimensionalen Matrix gespeicherten Korrekturwerte müssen folgende Parameter berücksichtigen:

Umkehrpunkt-Parameter, Zeitabstand $\Delta t$, Kategorie der Kurvenform und kinematisches Übersprechverhalten der verschiedenen Belastungskomponenten.

Jeder Parameter bildet eine Dimension der mehrdimensionalen Matrix.

Die experimentelle Praxis hat gezeigt, daß einzelne Parameter häufig in speziellen Fällen konstant bleiben und somit bei der Korrektur-Matrix-Betrachtung unberücksichtigt bleiben können.

Beispielsweise können gleiche Kurvenformen auftreten, oder ein großer Teil der Lastspiele können in Kosinusform ablaufen. Ferner ist ein identisches kinemathisches Übersprechverhalten bei einzelnen Einzelereignissen möglich. Dies ist typisch, wenn bei mehreren Lastkomponenten keine nennenswerten Wege auftreten.

In diesen Fällen muß zusätzlich zur Matrix der Umkehrpunkte nur noch eine weitere Dimension, nämlich der Zeitabstand $\Delta t$, berücksichtigt werden.

Durch die matrix-orientierte Korrektur können auf diese Weise häufigere Korrekturen als einmal pro Wiederholperiode erreicht werden. Insbesondere für Versuche mit wenigen Wiederholperioden ist dies vorteilhaft.

Grundsätzlich ist auch eine Mischung der file-orientierten Korrektur und einer matrix-orientierten Korrektur möglich.

Von großer Bedeutung kann auch eine Versuchszeitverkürzung sein. Diese ist grundsätzlich über eine erhöhte Prüffrequenz möglich.

Mit dem vorgenannt beschriebenen Verfahren werden die Sollwerte in Lastrichtung so verzerrt, daß an den Lastumkehrpunkten in jedem Kanal die richtigen, dem ursprünglichen Sollwert entsprechenden Istwerte auftreten. Der Phasenbezug zwischen den Kanälen bleibt erhalten, da auch in Richtung der Zeitachse eine Verzerrung des Sollwertes dergestalt aufgeprägt wird, so daß zum vorerwähnten Master-Kanal jeweils der richtige zeitliche Bezug der Slave-Kanäle vorhanden ist. In genügender Genauigkeit ist dies der Fall, wenn darauf geachtet wird, daß die Umkehrpunkte der Slave-Kanäle, die in einem Zeitabstand $\Delta t$ des Master-Kanals fallen, zum selben prozentualen Zeitpunkt in diesem Zeitabschnitt auftreten. Mit Hilfe dieses Vorgehens kann auch eine zeitliche Raffung der Sollwertvorgabe erreicht werden, indem der Zeitabschnitt $\Delta t$ des Master-Kanals verkürzt wird. Die Zeitpunkte, zu denen die Umkehrpunkte in den Slave-Kanälen auftreten, müssen dann natürlich auch entsprechend zeitlich gerafft werden, so daß sie zum prozentual gleichen Zeitpunkt auftreten wie in der ursprünglichen Lastfolge.

Dies ist jedoch nur unter der Voraussetzung zulässig, daß im Master-Kanal im Umkehrpunkt nach dem betrachteten Zeitabschnitt $\Delta t$ die Last mit genügender (beim Parametrieren einstellbaren) Genauigkeit erreicht wird. Gleichzeitig müssen auch alle Umkehrpunkte der Slave-Kanäle, die in diesem und dem nächsten Zeitabschnitt $\Delta t$ fallen, mit genügender Genauigkeit in der letzten Wiederholperiode erreicht worden sein. Nur dann kann eine solche zeitliche Raffung in der darauffolgenden Wiederholperiode vorgenommen werden. Die Raffung (Frequenz-Erhöhung) sollte beim Parametrieren des Versuches in vorgebbaren Schrittgrößen ($\Delta t$ wird um einen bestimmten Prozentsatz verkleinert) geschehen.

Mit der gleichen Maßnahme kann auch eine Genauigkeitssteigerung der Versuchslasten erreicht werden. Falls ein Umkehrpunkt mit dem ursprünglichen $\Delta t$, das für dieses Halblastspiel im Sollwert vorgesehen ist, auch mit Korrekturen des Istwertes in Lastrichtung nicht erreicht werden kann, so kann entsprechend der oben beschriebenen Vorgehensweise ein $\Delta t$ auch verlängert werden. Dies mag bei hohen, sehr raschen Laständerungen des Sollwertverlaufs nötig werden.

### Patentansprüche

1. Verfahren zur adaptiven Istwert-Korrektur bei Schwingfestigkeitsversuchen, bei dem eine Abweichung des Istwertes vom Sollwert ermittelt wird und durch eine Änderung der Sollwertvorgabe zu einem Korrektur-Sollwert der Istwert in Richtung auf den eigentlichen Sollwert hin geregelt werden kann,
**gekennzeichnet durch** die Schritte,
daß dem Soll- und Istwert entsprechende Signale in jeweils zumindest ein Einzelereignis aufgelöst werden, welche jeweils **durch** zwei Umkehrpunkte definiert sind und beschrieben werden **durch**

   - ein erstes Lastmaß im ersten Umkehrpunkt,
   - ein zweites Lastmaß im zweiten Umkehrpunkt,
   - einen Zeitabstand zwischen den Umkehrpunkten oder die Zeitpunkte der Umkehrpunkte und
   - eine Form der Verbindungskurve zwischen den beiden Umkehrpunkten und

   daß **durch** Vergleich der einander entsprechenden Einzelereignisse von Soll- und Istwerten die neuen Korrektur-Sollwerte gebildet werden, die nachfolgend anstelle der vorherigen Sollwerte zur Ansteuerung verwendet werden.

2. Verfahren nach Anspruch 1,
**dadurch gekennzeichnet, daß** ein Unterschied im Lastmaß und/oder ein zeitlicher Versatz beim Vergleich der Einzelereignisse von Sollund Istwert berücksichtigt wird.

3. Verfahren nach Anspruch 1 oder 2,
daß bei mehreren Lastkomponenten jeweils einer Lastkomponente ein Soll- und Istwert zugeordnet ist.

4. Verfahren nach Anspruch 3,
**dadurch gekennzeichnet, daß** bei der Ermittlung der Korrektur-Sollwerte auf die Einhaltung der richtigen Phasenlage der Signale der einzelnen Kanäle zueinander geachtet wird.

5. Verfahren nach einem der Ansprüche 1 bis 4,
**dadurch gekennzeichnet, daß** die den Sollwerten zuzuordnenden Einzelereignisse in einem Sollwert-File in chronologisch richtiger Reihenfolge abgespeichert werden.

6. Verfahren nach einem der Ansprüche 3 bis 5,
**dadurch gekennzeichnet, daß** die Abspeicherung bei mehreren Kanälen getrennt voneinander geschieht.

**7.** Verfahren nach einem der Ansprüche 3 bis 6,
**dadurch gekennzeichnet, daß** bei mehreren Kanälen ein Master- und ein oder mehrere Slave-Kanäle vorgesehen sind.

**8.** Verfahren nach Anspruch 7,
**dadurch gekennzeichnet, daß** die Slave-Kanäle in Ausrichtung auf den Master-Kanal synchronisiert werden.

**9.** Verfahren nach Anspruch 7 oder 8,
**dadurch gekennzeichnet, daß** als Master-Kanal derjenige Kanal definiert ist, der am wenigsten prüftechnische Reserven besitzt.

**10.** Verfahren nach einem der vorhergehenden Ansprüche,
**dadurch gekennzeichnet, daß** die Verbindungskurve in diskreten Stufen angegeben wird, welche in einer Tabelle abgelegt sind.

**11.** Verfahren nach einem der Ansprüche 1 bis 9,
**dadurch gekennzeichnet, daß** die Form der Verbindungskurve mathematisch beschrieben ist.

**12.** Verfahren nach einem der vorhergehenden Ansprüche,
**dadurch gekennzeichnet, daß** die Kurvenform der Verbindungskurve mittels zumindest eines Stützpunktes korrigiert wird.

**13.** Verfahren nach einem der vorherigen Ansprüche,
**dadurch gekennzeichnet, daß** zwischen dem ersten und dem zweiten Umkehrpunkt zumindest eine Stützstelle eingefügt wird, an der der Soll- und der Ist-Wert verglichen und eine Korrektur am Sollwert durchgeführt wird.

**14.** Verfahren nach einem der vorhergehenden Ansprüche,
**dadurch gekennzeichnet, daß** die Korrektur-Sollwerte in einer mehrdimensionalen Matrix abgespeichert sind.

**15.** Verfahren nach einem der vorhergehenden Ansprüche,
**dadurch gekennzeichnet, daß** die Zeitdauer $\Delta t$ zwischen dem ersten und dem zweiten Umkehrpunkt verlängert oder verkürzt wird.

**Claims**

**1.** A method of adaptive actual-value correction in vibration resistance tests, wherein a deviation of the actual value from the set value is obtained and the set value is altered to a corrective set value so as to adjust the actual value in the direction towards the true set value, **characterised by** the following steps:

signals corresponding to the set value and the actual value are resolved into at least one respective individual event, each event being defined by two turning points and described by

- a first load measurement at the first turning point,

- a second load measurement at the second turning point,

- a time interval between the turning points or the times of the turning points and

- a shape of the connecting curve between the two turning points and

the individual events of the set and the actual values corresponding to one another are compared so as to form the new corrective set values, which are subsequently used for actuation instead of the previous set values.

**2.** A method according to claim 1, **characterised in that** account is taken of a difference in the load measurement and/or a time shift during the comparison between the individual events of the set value and the actual value.

**3.** A method according to claim 1 or 2, **characterised in that** when there are more than one load component, a set value and an actual value is associated with each load component.

**4.** A method according to claim 3, **characterised in that** when determining the corrective set values, care is taken to maintain the right phase position of the signals in the individual channels relative to one another.

**5.** A method according to any of claims 1 to 4, **characterised in that** the individual events associated with the set values are stored in the correct chronological sequence in a set-value file.

**6.** A method according to any of claims 3 to 5, **characterised in that** filing is performed separately in each channel when there are more than one.

**7.** A method according to any of claims 3 to 6, **characterised in that** when there are more than one channels a master channel and one or more slave channels are provided.

**8.** A method according to claim 7, **characterised in that** the slave channels are synchronised in alignment with the master channel.

**9.** A method according to claim 7 or 8, **characterised in that** the master channel is defined as that channel which has the fewest reserves for test purposes.

**10.** A method according to any of the preceding claims, **characterised in that** the connecting curve is given in discrete steps, which are filed in a table.

**11.** A method according to any of claims 1 to 9, **characterised in that** the shape of the connecting curve is described mathematically.

**12.** A method according to any of the preceding claims, **characterised in that** the shape of the connecting curve is corrected by at least one restart point.

**13.** A method according to any of the preceding claims, **characterised in that** the set value is compared with the actual value and corrected at at least one restart point inserted between the first and the second turning point.

**14.** A method according to any of the preceding claims, **characterised in that** the corrective set values are stored in a multidimensional matrix.

**15.** A method according to any of the preceding claims, **characterised in that** the times $\Delta t$ between the first and the second turning point are lengthened or shortened.

**Revendications**

**1.** Procédé pour la correction adaptative d'une valeur réelle lors d'essai de résistance aux vibrations selon lequel on calcule un écart de la valeur réelle par rapport à la valeur de consigne et ainsi la valeur réelle peut être réglée en direction de la valeur de consigne effective en modifiant la valeur de consigne donnée en une valeur de consigne corrective,
**caractérisés en ce que**
des signaux correspondant aux valeurs de consigne et réelle sont réduits chacun à au moins un événement individuel, les signaux étant définis chacun par deux points d'inversion et décrits par

- une première amplitude de charge dans le premier point d'inversion
- une deuxième amplitude de charge dans le deuxième point d'inversion
- un intervalle de temps entre les points d'inversion ou les moments des points d'inversion et
- une allure de la courbe de raccordement entre les deux points de consigne et

les nouvelles valeurs de consigne correctives sont formées par la comparaison des événements individuels des valeurs de consigne et réelles se correspondant, lesquelles nouvelles valeurs de consigne correctives sont ensuite utilisées pour l'excitation à la place des valeurs de consigne précédentes.

**2.** Procédé selon la revendication 1,
**caractérisé en ce qu'**
une différence dans l'amplitude de charge et/ou un décalage temporel est pris en compte pour la comparaison des événements individuels de la valeur de consigne et de la valeur réelle.

**3.** Procédé selon la revendication 1 ou 2,
**caractérisé en ce qu'**
une valeur réelle et une valeur de consigne est associée à chaque fois à un composant de charge s'il y a plusieurs composants de charge.

**4.** Procédé selon la revendication 3,
**caractérisé en ce que**
lors du calcul des valeurs de consigne correctives on veille à respecter la relation correcte des phases des signaux des différents canaux les uns par rapport aux autres.

**5.** Procédé selon l'une quelconque des revendications 1 à 4,
**caractérisé en ce que**
les événements individuels associés aux valeurs de consigne sont enregistrés dans un fichier de la valeur de consigne dans l'ordre chronologique correct.

**6.** Procédé selon l'une quelconque des revendications 3 à 5,
**caractérisé en ce que**
s'il y a plusieurs canaux, l'enregistrement se produit de manière séparée.

**7.** Procédé selon l'une quelconque des revendications 3 à 6,
**caractérisé en ce qu'**
un canal maître ainsi qu'un ou plusieurs canaux esclaves sont prévus s'il y a plusieurs canaux.

**8.** Procédé selon la revendication 7,
**caractérisé en ce que**
les canaux esclaves sont synchronisés en direction du canal maître.

**9.** Procédé selon la revendication 7 ou 8,
**caractérisé en ce que**
le canal comportant le moins de réserves sur le plan de la technique d'essai est défini comme le canal maître.

**10.** Procédé selon l'une quelconque des revendications précédentes,
**caractérisé en ce que**
la courbe de raccordement est indiquée dans des étapes discrètes enregistrées dans un tableau.

**11.** Procédé selon l'une quelconque des revendications 1 à 9,
**caractérisé en ce que**
l'allure de la courbe de raccordement est décrite mathématiquement.

**12.** Procédé selon l'une quelconque des revendications précédentes,
**caractérisé en ce que**
l'allure de la courbe de raccordement est corrigée à l'aide d'au moins un point d'appui.

**13.** Procédé selon l'une quelconque des revendications précédentes,
**caractérisé en ce qu'**
on introduit entre le premier et le deuxième point d'inversion au moins un point d'appui sur lequel sont comparées la valeur réelle et la valeur de consigne et où a lieu une correction sur la valeur de consigne.

**14.** Procédé selon l'une quelconque des revendications précédentes,
**caractérisé en ce que**
les valeurs de consigne correctives sont enregistrées dans une matrice pluridimensionnelle.

**15.** Procédé selon l'une quelconque des revendications précédentes,

**caractérisé en ce que**
la durée $\Delta t$ entre le premier et le deuxième point d'appui est allongée ou raccourcie.

Fig. 1

Fig. 2

Fig. 3

EP 0 818 673 B1